# EUROPEAN PATENT SPECIFICATION

(11) **EP 3 641 329 B1**
(45) Date of publication and mention of the grant of the patent: **17.09.2025**
(21) Application number: 18306361.9
(22) Date of filing: 17.10.2018
(51) Int. Cl.: H04Q 11/00

(54) **OPTICAL NETWORK ELEMENTS**
OPTISCHE NETZWERKELEMENTE
ÉLÉMENTS DE RÉSEAU OPTIQUE

(43) Date of publication of application: 22.04.2020
(73) Proprietor: Alcatel Submarine Networks, 91620 Nozay (FR)
(72) Inventor: ZAMI, Thierry, 91300 Massy (FR); LAVIGNE, Bruno, 92160 Antony (FR)
(74) Representative: Loyer & Abello

(56) References cited:
- US-A1- 2010 008 672
- US-A1- 2016 269 140
- US-B1- 7 236 704

## Description

### TECHNICAL FIELD

Aspects relate, in general, to optical network elements.

### BACKGROUND

Optical networks, such as wavelength division multiplexed (WDM) networks for example, may be composed of equipment from multiple different system vendors. Individual sub-systems, such as elastic optical transponders (EOT) and Wavelength Selective Switches (WSS) featuring smaller spectral granularity, in wavelength routing Optical Cross-Connects (OXC) for example, are also becoming more versatile. These two developments bring with them an unprecedented interworking situation in which pieces of equipment from different system vendors can be combined.

US 7,236,704 B1 relates to an optical add/drop multiplexer (OADM) incorporating channel power balancing to obtain uniform channel power levels. In DI, channel power balancing is effected by one or more variable optical attenuators for variably attenuating optical signals on channels of the transmit, drop and/or add paths of the OADM.

### SUMMARY

According to an example, there is provided an optical network element, comprising an optical input for receiving a plurality of optical signals on a plurality of wavelength channels;an optical output for transmitting a plurality of optical signals on the plurality of wavelength channels;a distributing component arranged to pass optical signals from the optical input to an optical transit path and to an optical drop path;a merging component arranged to pass optical signals from the optical transit path and from an optical add path to the optical output,a drop module comprising a plurality of optical receivers for demodulating optical signals;an add module comprising a wavelength multiplexing arrangement connected to the optical add path and a plurality of optical transmitters connected to the wavelength multiplexing arrangement for generating optical signals on the wavelength channels; characterised by the optical network element further comprising:a calibration module comprising an adjustable signal degradation stage to apply a selected physical modification to an optical signal routed from the add module to the drop module through the calibration module.

According to an example, there is provided a method for generating a calibration signal in an optical network element, the optical network element comprising an add module and a drop module, the method comprising routing an optical signal from one of a plurality of optical transmitters of the add module to the drop module through a calibration module comprising an adjustable signal degradation stage configured to apply a selected physical modification to the optical signal; and applying the selected physical modification to the optical signal by the adjustable signal degradation stage.

### BRIEF DESCRIPTION OF THE DRAWINGS

Embodiments will now be described, by way of example only, with reference to the accompanying drawings, in which:
Figure 1 is a schematic representation of an optical network element according to an example;
Figure 2 is a schematic representation of a Directionless and possible Colorless (CD) OXC architecture according to an example;
Figures 3 and 4 are schematic representations of two possible colorless/directionless/contentionless (CDC) OXC layouts according to an example;
Figure 5 is a schematic representation of an optical network element including a calibration
Figure 6 is a schematic representation of a calibration module according to an example;
Figure 7 is a schematic representation of an optical network element according to an example;
Figure 8 is a schematic representation of an optical network element according to an example;
Figures 9 and 10 are schematic representations of two possible combinations for degradation stages in a calibration module according to an example;
Figure 11 is a schematic representation of a calibration module according to an example;
Figure 12 is an example of two calibration curves established with the module depicted in figure 11, according to an example;
Figures 13 and 14 are schematic representations depicting cases when a calibrating module is directly connected to the multidirectional A/D blocks according to an example; and
Figure 15 is a schematic representation of an optical network element according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The term "transparent" is applied to a transmission system in which a signal remains optical without being converted into an electronic signal when passing through a network routing node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical crossconnects (OXC). Add and drop devices in WDM network elements refer to subsystems providing add and drop functions, i.e. a capability to make write-accesses and read-accesses to the WDM transport layer.

The performance of a network can be maximized whether the whole network is equipped with equipment from the same vendor, or when equipped with equipment from multiple vendors. For example, one vendor may provide line equipment, such as in-line amplifiers and OXCs, while a part of the installed EOTs connected to these OXCs may be provided by other system vendors. In such a case the corresponding connections transmitted through the network are called "alien wavelengths" handled by "alien EOTs".

However, maximizing performance in a network in which there are subsets of pieces of equipment from different vendors can be difficult since not enough details to carry out solid network dimensioning may be available. This is likely to become even more problematic with next generation equipment. For instance, there may be an expectation for new-generation transponders and wavelength cross-connects to remotely and autonomously adapt their spectral efficiency (in terms of bit/s/Hz) to the available spectral resources and above all to the quality of the Light Path (LP) followed through the network.

In order to obtain maximum benefit from this feature, it is desirable for the EOT to be very finely calibrated (ideally before lighting up the service in the network). Today, this calibration is achieved once in the factory. However, due to the large increase of the number of possible carrier modulation modes, it will be more and more cumbersome to have all the modulations tested in the factory. Furthermore, the values derived from this calibration (for instance the curve of Signal to Noise Ratio (SNR) as a function of the Optical Signal to Noise Ratio (OSNR) of the detected signal can evolve along the life of the EOT once installed in the field, owing to ageing. Therefore, it would be better to be able to assess the EOT performance as regularly as possible. The situation is even more critical in case of alien wavelengths because, without an up-to-date version of this SNR versus OSNR curve for its EOT, its utilization might be significantly suboptimal and this knowledge might be difficult to obtain from the system vendor in question.

According to an example, there is provided a calibration system. The calibration system can be used with an OXC that can be shared between multiple EOTs.

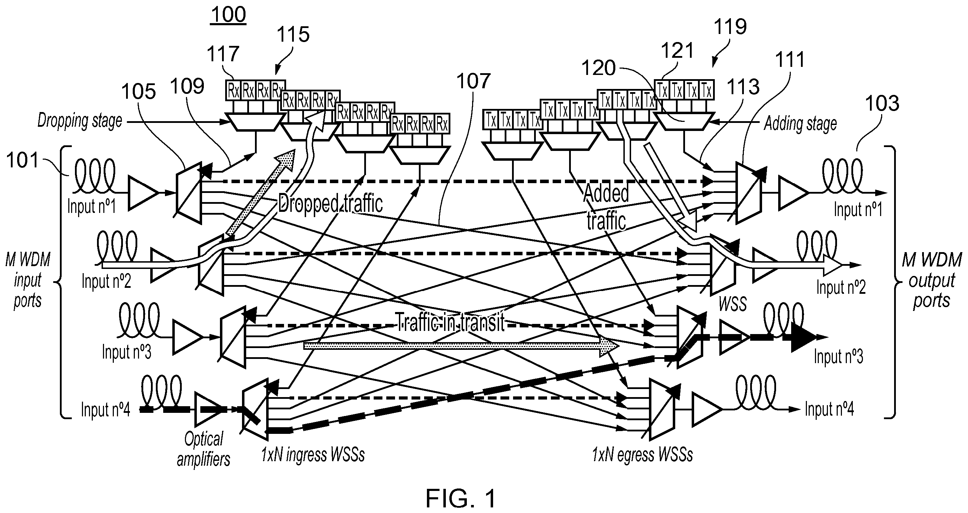

Figure 1 is a schematic representation of an optical network element according to an example. More specifically, figure 1 is a functional representation of an OXC layout according to an example. In the example of figure 1, and other figures presented herein, EOTs are represented by their transmitting (Tx) and receiving (Rx) parts, and are directly connected to each WDM direction of the OXC. Accordingly, in the example of figure 1, the architecture is not directionless.

The optical network element 100 of figure 1 comprises an optical input 101 for receiving a plurality of optical signals on a plurality of wavelength channels. Multiple such optical inputs are shown in figure 1. The element further comprises an optical output 103 for transmitting a plurality of optical signals on the plurality of wavelength channels. Multiple such optical outputs are shown in figure 1. A distributing component 105 (for each optical input 101) is arranged to pass optical signals from the optical input 101 to an optical transit path 107 and to an optical drop path 109. For each optical input 101 figure 1 depicts multiple such transit and drop paths, as shown.

For each optical output 103, a corresponding merging component 111 is arranged to pass optical signals from an optical transit path and from an optical add path 113 to the optical output. A drop module 115 comprising a plurality of optical receivers 117 is provided for demodulating optical signals. An add module 119 comprising a wavelength multiplexing arrangement 120 connected to the optical add path 113 and a plurality of optical transmitters 121 connected to the wavelength multiplexing arrangement 120 is provided for generating optical signals on the wavelength channels.

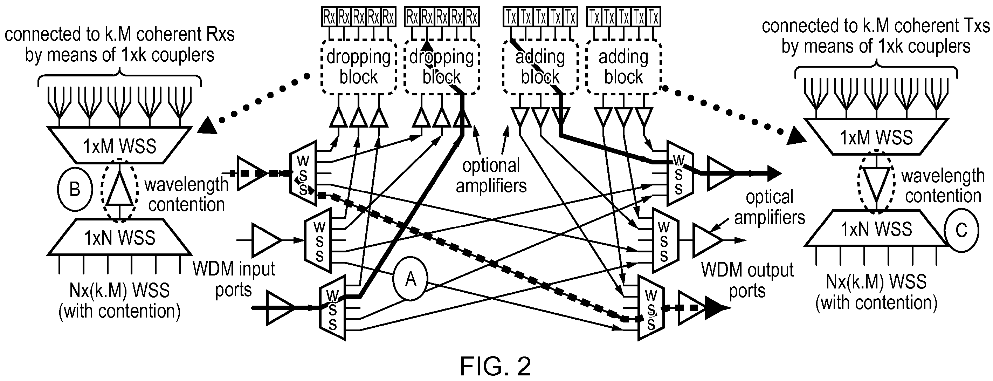

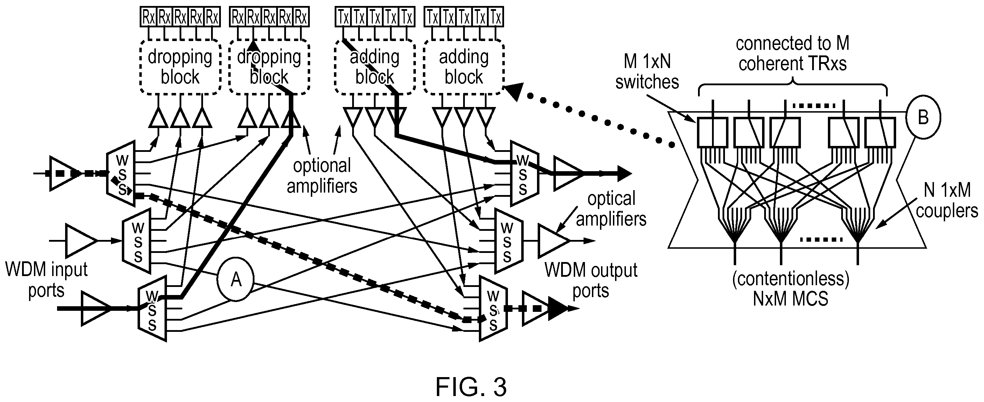

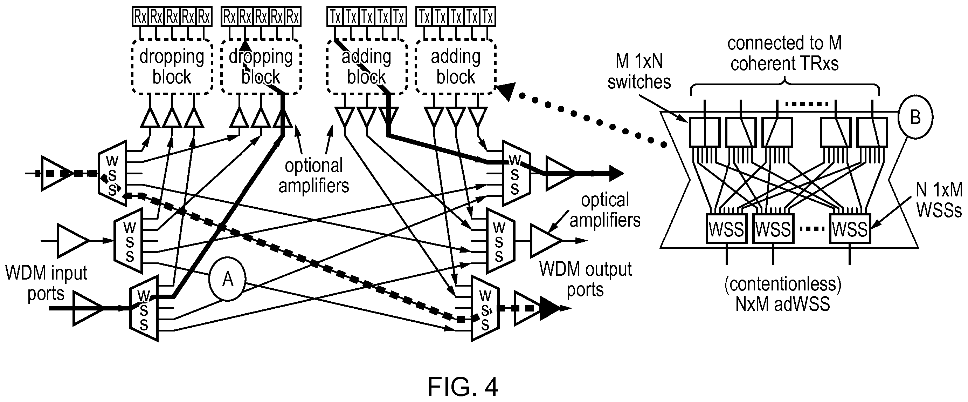

Figure 2 shows the example of a Directionless and possible Colorless (CD) OXC architecture according to an example. Figures 3 and 4 show the layouts of 2 possible colorless/directionless/contentionless (CDC) OXC layouts according to an example, either based upon MultiCast Switch (MCS) integrated modules (figure 3) or upon add/drop WSS (adWSS) integrated modules (figure 4).

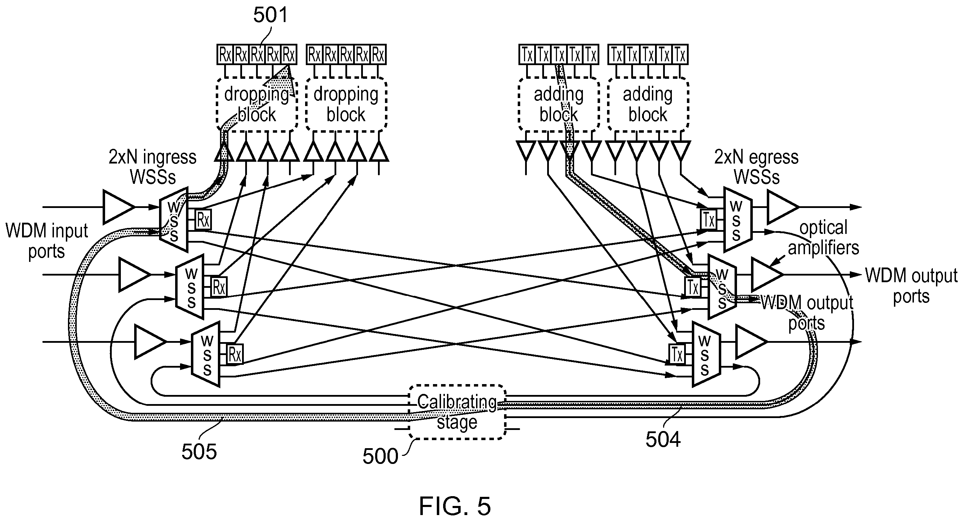

Figure 5 is a schematic representation of an optical network element including a calibration module according to an example. In the example of figure 5, the calibration module 500 is shared among all the transponders connected to the OXC, even in a directional way, by using ingress/egress 2xN WSSs instead of 1xN more usual ones. The implementation depicted in figure 5 can be used with a basic 1xN WSS by connecting the WDM OXC ports to the calibration module via tap couplers.

In an example, an EOT to be assessed can send its signal 504 to one of the WDM directions of the OXC it has access to by setting its optical frequency at a value not yet occupied on this WDM direction. This wavelength then goes to the specific port connecting this WDM direction to one of the input ports of the calibration module 500. In an example, the calibration module 500 comprises an adjustable signal degradation stage configured to apply a selected physical modification to an optical signal routed through the calibration module whereby to generate a modified optical signal for egress from one of the plurality of optical receivers 501.

The modified optical signal 505 is steered to the appropriate WDM port of the OXC (a priori, the same as the one from when it was initially sent to the calibration module, but in the reverse direction). From this ingress WDM port it can then be sent to the appropriate Rx, for instance the Rx of the same EOT from where this tested signal was emitted, or another one. This optical connection is exemplified in figure 5 by a bold line. Once this optical connection is established between the Tx/Rx pair, the degradation(s) can be adjusted to get an informative curve of the corresponding Q factor, SNR, or any other parameter of quality that coherent detection of Rx can measure, as a function of the level of physical degradation experienced by the signal.

Ingress traffic (or signal) is network traffic that originates from outside of the optical network element and proceeds toward a destination inside of the optical network element. Egress traffic (or signal) is network traffic that begins inside of the optical network element and proceeds through its elements to a destination somewhere outside of the network.

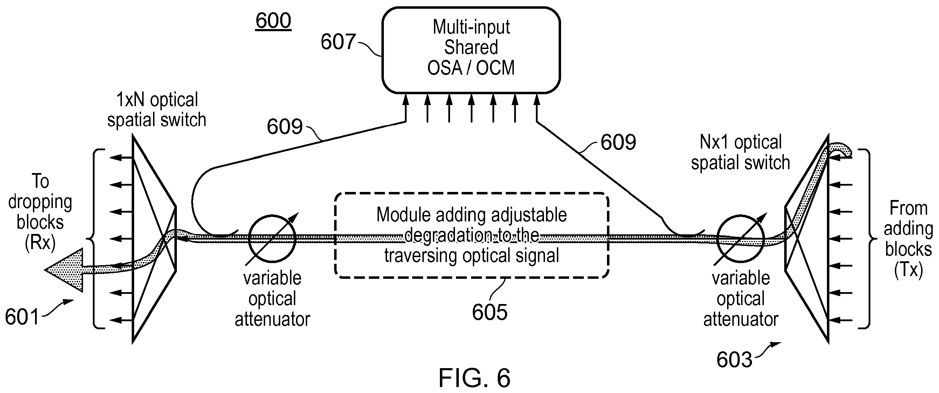

Figure 6 is a schematic representation of a calibration module according to an example. The module 600 of figure 6 has 1xN optical spatial switches at both ends (601; 603) configured to select from (603) and to which (701) WDM OXC direction a signal will come/go.

An example of possible adjustable source(s) of physical degradation 605 will be discussed below in more detail. In an example, additional adjustments can be made in the calibration module 600, such as the adjusting the power of the signal before applying a physical degradation as well as before sending the signal back to the Rx. In an example, an Optical Spectrum Analyzer (OSA) and/or Optical Channel Monitoring (OCM) 607 can also be provided as part of the calibration module 600, and may be connected using taping optical couplers 609 as shown in figure 6. An OSA/OCM can be used to indirectly derive some parameters, such as OSNR. In an example, the OSA and OCM 607 may be shared with other applications within the OXC. For instance, OCMs are already present in current OXCs for power levelling at the WDM OXC output ports and the elements 607 of figure 6 may be used for this also.

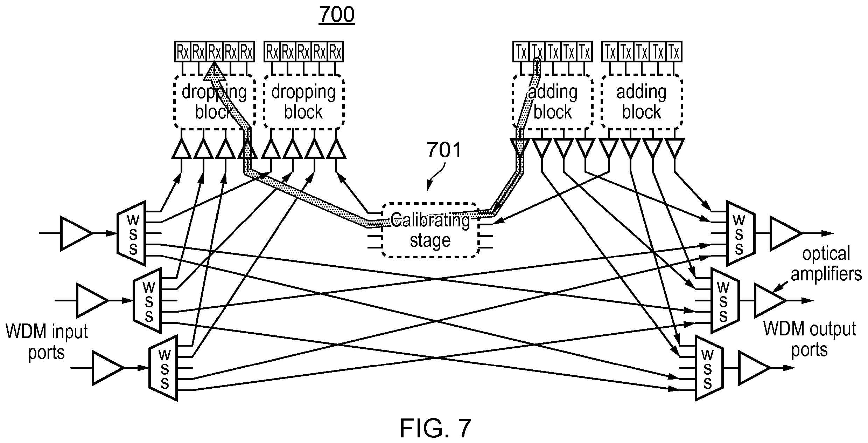

Figure 7 is a schematic representation of an optical network element according to an example. In the example of figure 7, the calibration module 701 is suitable for CD or CDC OXCs, and is directly interconnected to several A/D (add/drop) blocks in parallel. Hence, a signal for calibration does not reach the OXC WDM ports. This can be more convenient since a tested wavelength does not need to be available on one of the WDM OXC directions. Moreover, the tested signal will initially be purer before its degradation by the calibration module 701 since it will not experience the extra degradations as a result of passing via the ingress and egress WSSs. As pure a tested channel as possible is important since the amount of physical degradation experienced by a signal along its transmission path might be evaluated with respect to this initially tested reference. The example of figure 7 uses one extra connection port for each A/D module as compared to the one of figure 5.

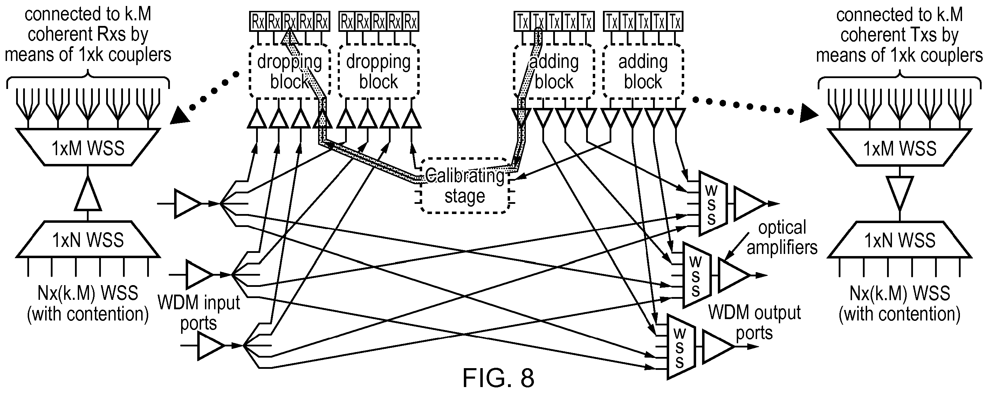

The architecture illustrated in figures 1 to 5 and in figure 7 are "Route and Select" ones. From a legacy standpoint, a "Broadcast and Select" OXC architecture has been the most deployed in the field and remains a significant part of the OXCs currently deployed. Unlike the "Route and Select" OXCs, in the "Broadcast and Select" OXCs the ingress 1xN WSSs are replaced by 1xN optical splitters, as shown in figure 8. The architecture of figure 8 is not appropriate for a CDC node, but it can be effectively implemented for CD OXCs or for OXCs which are neither CD nor CDC. In that respect, it is also applicable in case of "Broadcast and Select" OXC, especially when the calibration module is directly connected to the A/D blocks in case of CD OXC, as shown in figure 7.

In an example, the source of physical degradations seen by a signal passing through the calibration module can be unique or multiple. In the latter case, each degradation can also be individually selectable or the degradations to be applied can be accumulated, each one with a specific adjustable magnitude.

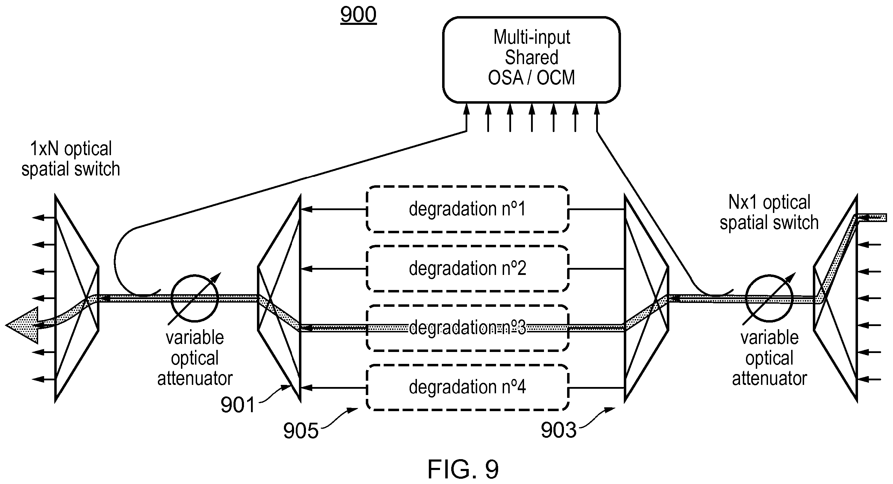

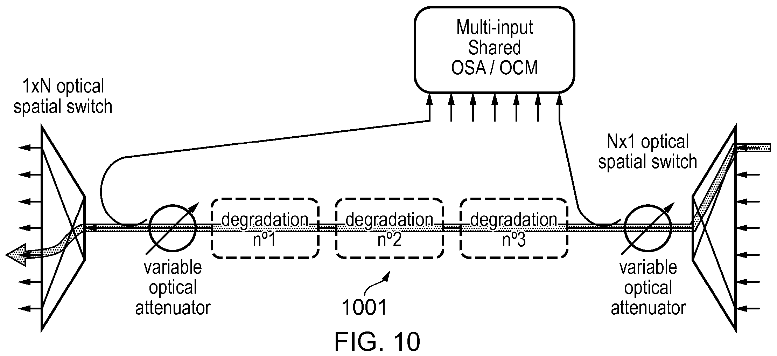

Figures 9 and 10 are schematic representations of two possible combinations for degradation stages in a calibration module according to an example. In the example of figure 9, two extra internal 1xP optical spatial switches 901, 903 for the calibration module 900 are provided that can steer a signal through a specific submodule 905 that adds a selected physical degradation to the signal, such as OSNR degradation, crosstalk, degradation, optical filtering degradation, PDL degradation, and so on. The degradation stages of figure 9 are arranged in parallel.

In the example of figure 9, a signal passing through the calibration module 900 will see one physical degradation. Accordingly, different calibration curves can be obtained from a single calibration module.

In the example of figure 10, multiple for degradation stages are provided in series. Accordingly, a combination of physical degradations can be applied to a signal as it successively traverses the degradation stages 1001. In an example, the impact of each physical degradation can still be observed by setting all the other ones to their respective minimum value.

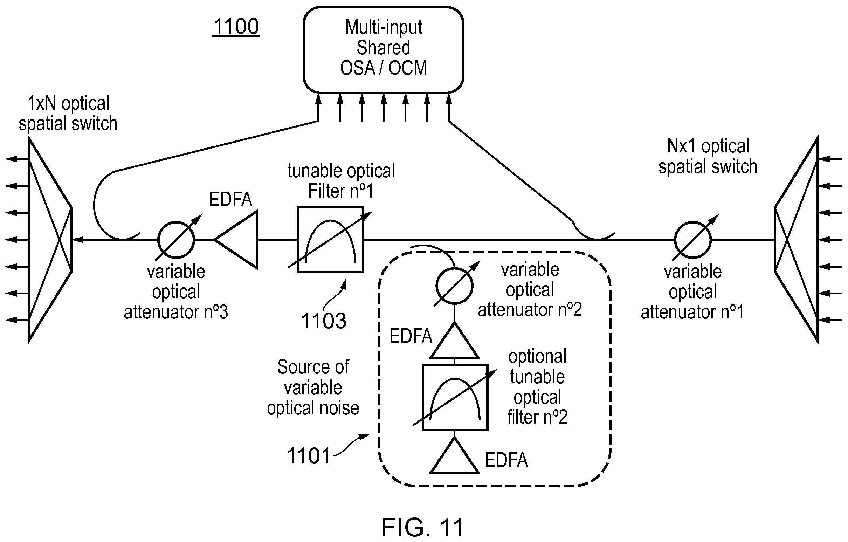

Figure 11 is a schematic representation of a calibration module according to an example. In the example of figure 11 a source 1101 of Amplified Spontaneous Emission (ASE) noise followed by a degradation induced by crossed tunable optical filter 1103 is provided. The filter 1103 removes any extra signal out of the band of the tested signal before sending it back to the Rx of the tested EOT. This is useful if the calibration module 1100 is directly connected to the dropping stage of an optical network element by MCS modules, since MCSs do not exhibit any filtering feature. In addition, the bandwidth and the frequency center of this filter could also be adjusted to investigate the impact of tight filtering on the signal of the tested EOT.

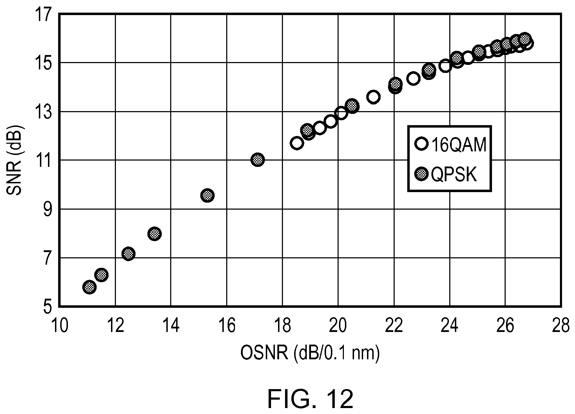

Figure 12 is an example of two calibration curves established with the module depicted in figure 11, according to an example. Any misalignment of the Q factor curves with respect to signal OSNR for the two different carrier constellation modulations shown (100 Gb/s QPSK versus 200 Gb/s 16QAM) provides helpful insight for finding out from which residual detected margin an operating 100 Gb/s connection could be overrated to a faster data rate (to 200 Gb/s in this example).

In an example, ideally, the two series of points of figure 12 related to each compared modulation should be aligned on the same curve (as shown in figure 12). But, sometimes, owing to implementation penalties or ageing, misalignment can occur. A calibration module according to an example can check for such misalignment in situ (in an optical network element) under normal operating conditions before establishing the requested connection.

Looping back a signal that is outgoing from one Tx to its Rx can be useful for other purposes. For example, the impact tight optical filtering is becoming more problematic when providing larger carrier data rates with higher spectral efficiency. This is due to the relative growth of signal Baud rates against the bandwidth of the optical filters experienced along the transparent light paths. Several techniques rely upon the comparison of the distortion of the signal spectral power density with respect to a reference one. Thus, in an example, a reference signal can be obtained via the calibration module described herein.

In an example, an OXC can be deployed without a calibration module, which can be installed afterwards, provided that additional ports have been planned on the A/D blocks from their initial deployment. A calibration module according to an example can bring additional information related each specific EOT. This information can also be used to feed a global data base allowing better follow up with respect to the global ageing of the same class of EOT as a tested one, especially via machine learning techniques for example. To that end, it is possible to collect information when the Tx of one EOT is connected to the Rx of another EOT on the same OXC, by passing through a calibration module. Such a decoupling enables the generation of diverse cases to feed such a data base and so improves the accuracy of any machine learning process applied on it.

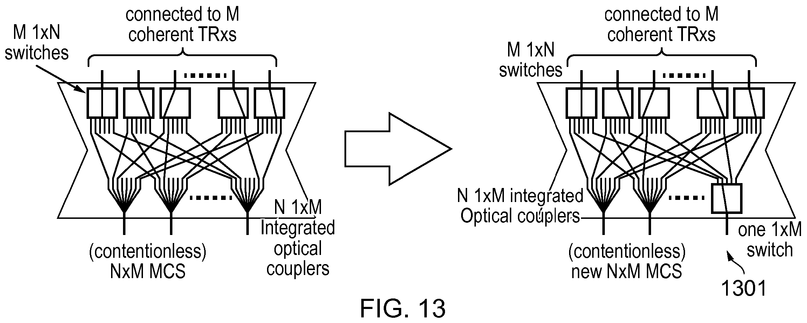

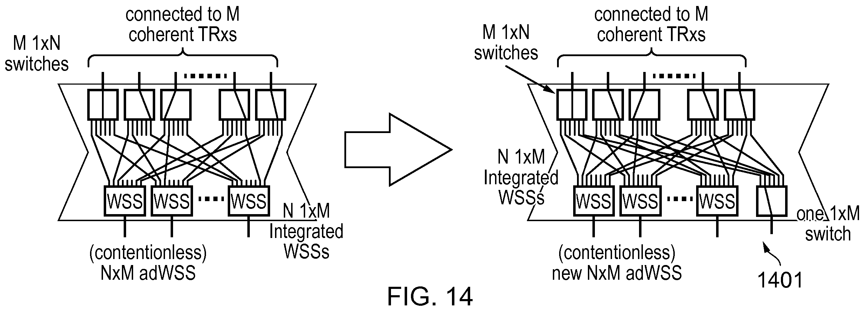

In an example, sharing a calibration module between numerous adding and dropping blocks enables numerous possible Tx/Rx permutations. For example, figure 7 illustrates the case when the calibrating module is directly connected to the multidirectional A/D blocks. In that framework, it is possible to develop a specific version of these A/D blocks, such as depicted schematically in figures 13 and 14 for example.

The optical adaptation is shown in figure 13 (for the MCS adaptation) and in figure 14 (for the adWSS adaptation). Because the intrinsic functionality of these respective A/D blocks degrades the signal more than requested for the calibrating functionality, the broadcasting function of NxM MCS implies that the signal normally goes through a large 1xM optical combiner/splitter than can add up to 15 dB of optical insertion loss. By replacing this coupler by a 1xM optical spatial switch (1301) only featuring about 1 dB insertion loss, extra unwanted degradation added by this A/D block can be mitigated. In an example, this also enables removal of one optional amplifier in the array of amplifiers, at least for the specific port of the A/D MCS module connected to the calibrating module.

Similarly, in the case of NxM adWSS, the wavelength selection involves up to 9 dB insertion loss plus extra issues in terms of optical filtering and optical crosstalk. Since the wavelength selectivity is not needed for the adWSS port connected to the calibrating module, this physical degradation can be significantly mitigated by replacing the 1xM integrated WSS by a simpler 1xM optical spatial switch 1401 at this port, as depicted in figure 14.

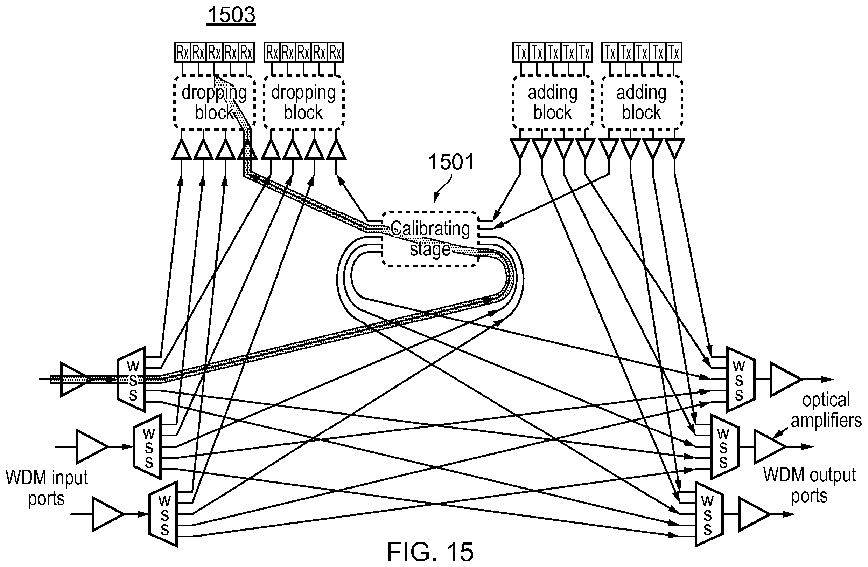

Figure 15 is a schematic representation of an optical network element according to an example. In the example of figure 15, the calibration module 1501 is additionally connected to the ingress and egress WSS's of the OXC transit part. In this way, one dropped signal can go through it before being steered to the real dropping stage 1503, as exemplified by the bold line in this figure. In some case, it may be desirable or relevant to locally add extra adjustable physical degradations to a signal already propagated through the network, such as to improve the analysis about the physical impairments incurred by the signal along the path it has followed for example.

Such an observation may not be intended for optical channels transporting actual data, but may be for probing channels sent along a given light path to be more extensively examined. For instance, just before provisioning future actual channels along this same path.

The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. An optical network element (100), comprising:
an optical input (101) for receiving a plurality of optical signals on a plurality of wavelength channels;
an optical output (103) for transmitting a plurality of optical signals on the plurality of wavelength channels;
a distributing component (105) arranged to pass optical signals from the optical input (101) to an optical transit path (107) and to an optical drop path (109);
a merging component (111) arranged to pass optical signals from the optical transit path (107) and from an optical add path (113) to the optical output (103),
a drop module (115) comprising a plurality of optical receivers (117) for demodulating optical signals;
an add module (119) comprising a wavelength multiplexing arrangement (120) connected to the optical add path (113) and a plurality of optical transmitters (121) connected to the wavelength multiplexing arrangement (120) for generating optical signals on the wavelength channels; **characterised by** the optical network element further comprising:
a calibration module (500) comprising an adjustable signal degradation stage to apply a selected physical modification to an optical signal routed from the add module (119) to the drop module (115) through the calibration module (500).

2. An optical network (100) element as claimed in claim 1, wherein the calibration module comprises multiple adjustable signal degradation stages.

3. An optical network element (100) as claimed in claim 2, wherein the multiple adjustable signal degradation stages are arranged in series or parallel.

4. An optical network element (100) as claimed in any preceding claim, wherein the calibration module (500) further comprises a source of variable optical noise.

5. An optical network element (100) as claimed in any preceding claim, wherein the calibration module (500) is to apply the selected physical modification to the optical signal routed through the calibration module (500) from the optical input.

6. An optical network element (100) as claimed in any preceding claim, wherein the calibration module (500) is to apply the selected physical modification to the optical signal routed through the calibration module (500) from one of the optical transmitters (101).

7. An optical network element (100) as claimed in claim 6, wherein the calibration module (500) is to apply the selected physical modification to the optical signal routed through the calibration module (500) from one of the optical transmitters (121) via the merging component (111).

8. A method for generating a calibration signal in an optical network element (100), the optical network element (100) comprising an add module (119) and a drop module (115), the method comprising:
routing an optical signal from one of a plurality of optical transmitters (121) of the add module (119) to the drop module (115) through a calibration module (500) comprising an adjustable signal degradation stage configured to apply a selected physical modification to the optical signal; and
applying the selected physical modification to the optical signal by the adjustable signal degradation stage.

9. A method as claimed in claim 8, further comprising:
passing the optical signal through multiple adjustable signal degradation stages arranged in series.

## Patentansprüche

1. Optisches Netzwerkelement (100), umfassend:
einen optischen Eingang (101) zum Empfangen einer Vielzahl von optischen Signalen auf einer Vielzahl von Wellenlängenkanälen;
einen optischen Ausgang (103) zum Senden einer Vielzahl von optischen Signalen auf der Vielzahl von Wellenlängenkanälen;
eine Verteilungskomponente (105), die so angeordnet ist, dass sie optische Signale vom optischen Eingang (101) zu einem optischen Übertragungsweg (107) und zu einem optischen Abzweigweg (109) weiterleitet;
eine Zusammenführungskomponente (111), die so angeordnet ist, dass sie optische Signale vom optischen Übertragungsweg (107) und von einem optischen Zusatzweg (113) zum optischen Ausgang (103) weiterleitet,
ein Abzweigmodul (115) mit mehreren optischen Empfängern (117) zum Demodulieren optischer Signale;
ein Additionsmodul (119) mit einer Wellenlängenmultiplexanordnung (120), die mit dem optischen Zusatzweg (113) verbunden ist, und mit einer Vielzahl von optischen Transmittern (121), die mit der Wellenlängenmultiplexanordnung (120) verbunden sind, um optische Signale auf den Wellenlängenkanälen zu erzeugen; **dadurch gekennzeichnet, dass** das optische Netzwerkelement ferner umfasst:
ein Kalibrierungsmodul (500) mit einer einstellbaren Signalabschwächungsstufe zum Anwenden einer ausgewählten physikalischen Modifikation auf ein optisches Signal, das vom Additionsmodul (119) über das Kalibrierungsmodul (500) zum Abzweigmodul (115) geleitet wird.

2. Optisches Netzwerkelement (100) gemäß Anspruch 1, wobei das Kalibrierungsmodul mehrere einstellbare Signalabschwächungsstufen umfasst.

3. Optisches Netzwerkelement (100) gemäß Anspruch 2, wobei die mehreren einstellbaren Signalabschwächungsstufen in Reihe oder parallel geschaltet sind.

4. Optisches Netzwerkelement (100) gemäß einem der vorstehenden Ansprüche, wobei das Kalibriermodul (500) ferner eine Quelle für variables optisches Rauschen umfasst.

5. Optisches Netzwerkelement (100) gemäß einem der vorstehenden Ansprüche, wobei das Kalibriermodul (500) die ausgewählte physikalische Modifikation auf das optische Signal anwendet, das vom optischen Eingang durch das Kalibriermodul (500) geleitet wird.

6. Optisches Netzwerkelement (100) gemäß einem der vorstehenden Ansprüche, wobei das Kalibrierungsmodul (500) die ausgewählte physikalische Modifikation auf das optische Signal anwendet, das von einem der optischen Transmitter (101) durch das Kalibrierungsmodul (500) geleitet wird.

7. Optisches Netzwerkelement (100) gemäß Anspruch 6, wobei das Kalibrierungsmodul (500) die ausgewählte physikalische Modifikation auf das optische Signal anwendet, das von einem der optischen Transmitter (121) über die Zusammenführungskomponente (111) durch das Kalibrierungsmodul (500) geleitet wird.

8. Verfahren zum Erzeugen eines Kalibrierungssignals in einem optischen Netzwerkelement (100), wobei das optische Netzwerkelement (100) ein Additionsmodul (119) und ein Abzweigmodul (115) umfasst, wobei das Verfahren umfasst:
Leiten eines optischen Signals von einem einer Vielzahl von optischen Transmittern (121) des Additionsmodul (119) zu dem Abzweigmodul (115) durch ein Kalibrierungsmodul (500), das eine einstellbare Signalabschwächungsstufe umfasst, die so konfiguriert ist, dass sie eine ausgewählte physikalische Modifikation auf das optische Signal anwendet; und
Anwenden der ausgewählten physikalischen Modifikation auf das optische Signal durch die einstellbare Signalabschwächungsstufe.

9. Verfahren gemäß Anspruch 8, das ferner umfasst:
Leiten des optischen Signals durch mehrere in Reihe geschaltete einstellbare Signalabschwächungsstufen.

## Revendications

1. Élément de réseau optique (100), comprenant :
une entrée optique (101) destinée à recevoir une pluralité de signaux optiques sur une pluralité de canaux de longueur d'onde ;
une sortie optique (103) destinée à transmettre une pluralité de signaux optiques sur la pluralité de canaux de longueur d'onde ;
un composant de distribution (105) conçu pour faire passer des signaux optiques de l'entrée optique (101) à un chemin de transit optique (107) et à un chemin de chute optique (109) ;
un composant de fusion (111) conçu pour faire passer des signaux optiques du chemin de transit optique (107) et d'un chemin d'ajout optique (113) à la sortie optique (103),
un module de chute (115) comprenant une pluralité de récepteurs optiques (117) destinés à démoduler des signaux optiques ;
un module d'ajout (119) comprenant un agencement de multiplexage de longueur d'onde (120) connecté au chemin d'ajout optique (113) et une pluralité d'émetteurs optiques (121) connectés à l'agencement de multiplexage de longueur d'onde (120) pour générer des signaux optiques sur les canaux de longueur d'onde ; **caractérisé en ce que** l'élément de réseau optique comprend en outre :
un module d'étalonnage (500) comprenant un étage de dégradation de signal ajustable pour appliquer une modification physique sélectionnée à un signal optique acheminé du module d'ajout (119) au module de chute (115) par le biais du module d'étalonnage (500).

2. Élément de réseau optique (100) selon la revendication 1, dans lequel le module d'étalonnage comprend de multiples étages de dégradation de signal ajustable.

3. Élément de réseau optique (100) selon la revendication 2, dans lequel les multiples étages de dégradation de signal ajustable sont agencés en série ou en parallèle.

4. Élément de réseau optique (100) selon une quelconque revendication précédente, dans lequel le module d'étalonnage (500) comprend en outre une source de bruit optique variable.

5. Élément de réseau optique (100) selon une quelconque revendication précédente, dans lequel le module d'étalonnage (500) doit appliquer la modification physique sélectionnée au signal optique acheminé par le biais du module d'étalonnage (500) depuis l'entrée optique.

6. Élément de réseau optique (100) selon une quelconque revendication précédente, dans lequel le module d'étalonnage (500) doit appliquer la modification physique sélectionnée au signal optique acheminé par le biais du module d'étalonnage (500) depuis l'un des émetteurs optiques (121).

7. Élément de réseau optique (100) selon la revendication 6, dans lequel le module d'étalonnage (500) doit appliquer la modification physique sélectionnée au signal optique acheminé par le biais du module d'étalonnage (500) depuis l'un des émetteurs optiques (121) via le composant de fusion (111).

8. Procédé de génération d'un signal d'étalonnage dans un élément de réseau optique (100), l'élément de réseau optique (100) comprenant un module d'ajout (119) et un module de chute (115), le procédé comprenant :
l'acheminement d'un signal optique depuis l'un d'une pluralité d'émetteurs optiques (121) du module d'ajout (119) vers le module de chute (115) par le biais d'un module d'étalonnage (500) comprenant un étage de dégradation de signal ajustable configuré pour appliquer une modification physique sélectionnée au signal optique ; et
l'application de la modification physique sélectionnée au signal optique par l'étage de dégradation de signal ajustable.

9. Procédé selon la revendication 8, comprenant en outre :
le passage du signal optique à travers les multiples étages de dégradation de signal ajustable agencés en série.
